# EUROPÄISCHE PATENTSCHRIFT

(11) **EP 2 163 773 B1**
(45) Veröffentlichungstag und Bekanntmachung des Hinweises auf die Patenterteilung: **29.07.2015**
(21) Anmeldenummer: 09169847.2
(22) Anmeldetag: 09.09.2009
(51) Int. Cl.: B21H 3/02, B21K 1/46, F16B 35/04

(54) **Selbstzentrierende Schraube**
Self-centring screw
Vis à centrage automatique

(30) Priorität: 16.09.2008 DE 102008042141
(43) Veröffentlichungstag der Anmeldung: 17.03.2010
(73) Patentinhaber: KAMAX Holding GmbH & Co. KG, 35315 Homberg (Ohm) (DE)
(72) Erfinder: Wagner, Frank, 35418 Großen Buseck (DE)
(74) Vertreter: REHBERG HÜPPE + PARTNER

(56) Entgegenhaltungen:
- EP-A2- 1 069 324
- EP-A2- 1 296 070
- US-A1- 2007 147 974
- US-B2- 6 561 741

## Beschreibung

### TECHNISCHES GEBIET DER ERFINDUNG

Die Erfindung betrifft eine selbstzentrierende Schraube und ein Verfahren zu deren Herstellung.

Selbstzentrierende Schrauben sollen gewährleisten, dass eine Schraubverbindung des Außengewindes einer Schraube mit einem korrespondierenden Innengewinde einer Mutter oder eines anderen Bauteils verlässlich hergestellt werden kann, ohne dass negative Auswirkungen einer Fehlausrichtung der Achse der Schraube relativ zu der Achse der Mutter bzw. des Bauteils zum Tragen kommen.

Derartige Fehlausrichtungen können beim fortgesetzten Anziehen der Schraubverbindung zu solchen Beschädigungen des Gewindes der Schraube und/oder des Bauteils führen, dass die Schraubverbindung zur Erfüllung ihrer korrekten Funktion nicht mehr geeignet ist und ersetzt werden muss. Dabei ist der Effekt des so genannten "cross-threading" besonders zu beachten. Beim "cross-threading" führt z. B. eine fehlende kollineare Ausrichtung der Achsen der korrespondierenden Gewinde dazu, dass diese mit einem Versatz ineinandergreifen, der der halben Steigung der Gewinde entspricht. Auch bei einer geringeren Verschränkung der Achsen kann es zum "cross-threading" kommen, wenn z. B. der erste Gewindegang der Schraube, der ja nur unvollständig ausgebildet ist, nicht perfekt in den ebenfalls konisch ausgeführten ersten Gang des Mutterngewindes einfädelt. Besonders bei den aus Montagzeitgründen gewünschten hohen Verschraubungsdrehzahlen kommt es dann leicht zu Fresserscheinungen, die bis hin zur Zerstörung der ersten Gewindegänge führen können. Dadurch werden die Schrauben und/oder die Muttern unbrauchbar. Bei schwer zugänglichen Mutterngewinden kann dies zu großen Folgeschäden führen, da unter Umständen die gesamte Komponente, in der sich das Mutterngewinde befindet, verschrottet werden muss.

### STAND DER TECHNIK

Eine selbstzentrierende Schraube ist aus der europäischen Patentanmeldung EP 1 296 070 A2 bekannt. Die Schraube weist einen ersten Gewindeabschnitt mit einem ersten Gewinde mit einem ersten Außendurchmesser und einer ersten Steigung und einen zweiten Gewindeabschnitt mit einem zweiten Gewinde mit einem zweiten Außendurchmesser und einer zweiten Steigung auf. Der zweite Gewindeabschnitt ist als Selbstzentriergewindeabschnitt ausgebildet. Das zweite Gewinde weist eine verbreiterte Gewindespitze auf. Der zweite Außendurchmesser des zweiten Gewindes ist kleiner ist als der erste Außendurchmesser des ersten Gewindes. Die erste Steigung des ersten Gewindes und die zweite Steigung des zweiten Gewindes sind identisch.

Eine selbstzentrierende Schraube und ein Verfahren zu deren Herstellung sind aus der unter der internationalen Veröffentlichungsnummer WO 97104241 veröffentlichten PCT-Anmeldung bekannt. Weitere Mitglieder dieser Patentfamilie sind die US-Patente US 5,730,566**,** US 5,791,849**,** US 5,997,231 und US 6,162,001 sowie das deutsche Patent DE 696 10 838 T2**.** Die bekannte selbstzentrierende Schraube weist einen Kopf, einen Schaft und einen dem freien Ende der Schraube zugewandten Gewindeabschnitt mit einem Gewinde mit einer Steigung auf. Das Gewinde sowie dessen Steigung korrespondieren mit dem Innengewinde einer zugehörigen Mutter. Der axial und radial durchgehende Gewindeabschnitt weist im Bereich seines dem freien Ende der Schraube zugewandten Bereich eine verrundete Gewindespitze auf. Die verrundete Gewindespitze erstreckt sich über mindestens eine Umdrehung des Gewindes, d. h. über mindestens 360°. Dieser Bereich des axial und radial durchgehenden Gewindeabschnitts dient als Selbstzentriergewindeabschnitt. Aufgrund der verrundeten Form und des gegenüber dem "normalen" Gewinde verringerten Außendurchmessers kann sich das Außengewinde der Schraube beim fortgesetzten Einschrauben aus einer fehlausgerichteten Startposition heraus relativ zum Innengewinde des Mutter ausrichten und "cross-threading" korrigieren, ohne dass elastisch-plastische Verformungen der Gewinde auftreten. Vorzugsweise wird der Gewindeabschnitt mit dem "normalen" Gewinde sowie dem verrundeten Anfangsbereich mittels eines einzigen speziellen Rollwerkzeugs hergestellt, welches mit beiden Bereichen korrespondierende Rollbereiche enthält.

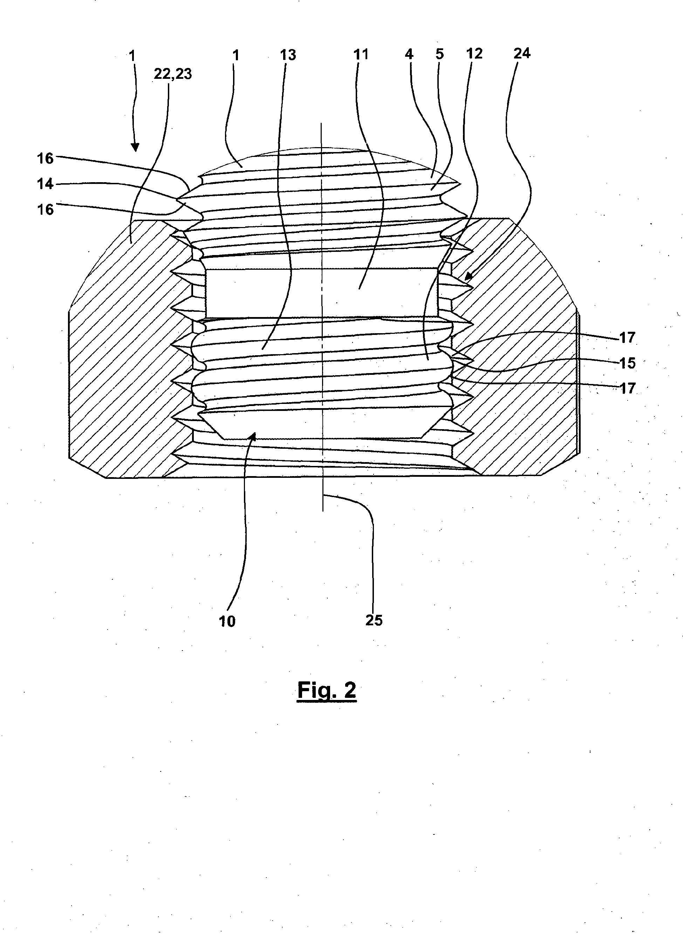

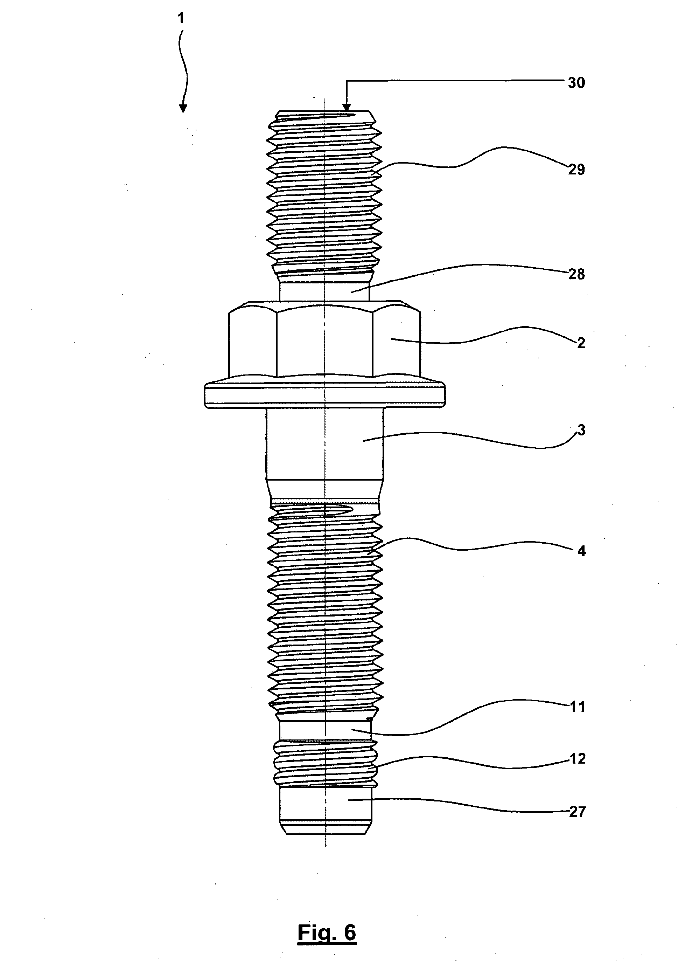

Aus der europäischen Patentanmeldung EP 0 942 181 A2 ist eine weitere selbstzentrierende Schraube bekannt. Die Schraube weist einen Kopf, einen Schaft und einen dem freien Ende der Schraube zugewandten Gewindeabschnitt mit einem Gewinde mit einer Steigung auf, welches in üblicher Weise zur Herstellung einer Schraubverbindung mit einem korrespondierenden Innengewinde eines Bauteils dient. Im Bereich ihres freien Endes besitzt die Schraube einen verjüngten Zentrieransatz. Bei einigen Ausführungsformen der Schraube erstreckt sich dabei der Gewindeabschnitt axial durchgehend bis in diesen verjüngten Zentrieransatz (siehe Fig. 2 und Fig. 6). Der verjüngte Zentrieransatz kann dabei anstelle eines radial durchgehenden Gewindes auch beabstandete Nocken aufweisen, die sich axial unmittelbar an das restliche Gewinde anschließen und dessen Steigung aufweisen.

Eine weitere selbstzentrierende Schraube ist aus der europäischen Patentanmeldung EP 1 069 324 A2 sowie der zugehörigen deutschen Übersetzung der europäischen Patentschrift DE 600 29 393 T2 bekannt. Die Schraube weist zwei unmittelbar aneinander anschließende Gewindeabschnitte mit einem ersten Gewinde mit einem ersten Außendurchmesser und einem zweiten Gewinde mit einem zweiten Außendurchmesser auf. Der zweite Gewindeabschnitt ist als Selbstzentriergewindeabschnitt ausgebildet und weist eine verbreiterte Gewindespitze auf. Der Außendurchmesser des zweiten Gewindes ist kleiner als der erste Außendurchmesser des ersten Gewindes. Die Steigungen der beiden Gewinde sind identisch.

Eine weitere selbstzentrierende Schraube ist aus dem US-Patent US 6,796,761 B2 bekannt. Die Schraube weist gemäß eines in den Fig. 12 und 13 dargestellten speziellen Ausführungsbeispiels zwei axial voneinander beabstandete Gewindeabschnitte, nämlich einen dem Kopf der Schraube zugewandten ersten Gewindeabschnitt und einen dem freien Ende der Schraube zugewandten zweiten Gewindeabschnitt, auf. Zwischen den Gewindeabschnitten ist ein glatter Schaftabschnitt vorgesehen, der einen Außendurchmesser aufweist, der mit dem Außendurchmesser des zweiten Gewindeabschnitts übereinstimmt. Der erste Außendurchmesser des ersten Gewindes des ersten Gewindeabschnitts ist deutlich größer als der zweite Außendurchmesser des zweiten Gewindes des zweiten Gewindeabschnitts. Die eigentliche Selbstzentrierungsfunktion erbringt der erste Gewindeabschnitt dadurch, dass er über einen sich über mehrere Umdrehungen des Gewindes erstreckenden Bereich konisch ausgebildet ist und eine abgerundete Gewindespitze und abgerundete Flanken aufweist. Die Gewindespitze des dem freien Ende der Schraube zugewandten zweiten Gewindeabschnitts ist hingegen normal scharfkantig ausgebildet. Laut der Beschreibung in Spalte 5, Zeile 23-27 sind die Steigungen der Gewinde identisch. In einem Nachsatz wird noch angegeben, dass die Steigungen auch unterschiedlich sein könnten. Dies spielt für die Funktion der bekannten Schraube aber keine wesentliche Rolle, da das Gewinde des zweiten Gewindeabschnitts derart klein ist, dass es nicht zu dem Innengewinde des korrespondierenden Bauteils mit einem entsprechend größeren Außengewinde passt. Dieses Innengewinde passt zu dem Außengewinde des ersten Gewindeabschnitts.

Weitere selbstzentrierende Schrauben sind aus dem US-Patent US 6,516,650 B1 sowie dem US-Patent US 6,561,741 B2 bekannt.

### AUFGABE DER ERFINDUNG

Der Erfindung liegt die Aufgabe zugrunde, eine selbstzentrierende Schraube und ein Verfahren zu deren Herstellung bereitzustellen, wobei die Schraube eine Fehlausrichtung des Außengewindes der Schraube relativ zu einem korrespondierenden Innengewinde beim Einschraubvorgang wirksam korrigiert und die Schraube wirtschaftlich spanlos herstellbar ist.

### LÖSUNG

Die Aufgabe der Erfindung wird erfindungsgemäß mit den Merkmalen des unabhängigen Patentanspruchs 1 bzw. 12 gelöst.

### WEITERER STAND DER TECHNIK

Aus der veröffentlichten deutschen Patentanmeldung DE 36 01 389 A1 ist eine Schraube zum Herstellen einer Schraubverbindung mit einer Mutter oder einem anderen ein korrespondierendes Innengewinde aufweisenden Bauteils bekannt. Um ein ungewolltes Lösen der verschraubten Schraubverbindung zu verhindern, weist das Gewinde der Schraube eine andere Steigung als das Gewinde des korrespondierenden Bauteils auf. Hierdurch wird beim Einschrauben des Außengewindes der Schraube in das Innengewinde des korrespondierenden Bauteils ein sich erhöhendes Reibmoment erzeugt, welches zu einer Klemmung und somit einer Sicherung der Gewindeverbindung in der verschraubten Stellung führt.

Ein weiteres Dokument des Stands der Technik ist Bossard: "Handbuch der Verschraubungstechnik", expert verlag, Seite 171-172, Gliederungspunkt 6.3.

### BESCHREIBUNG DER ERFINDUNG

Die Erfindung betrifft eine selbstzentrierende Schraube. Die Schraube weist einen ersten Gewindeabschnitt mit einem ersten Gewinde mit einem ersten Außendurchmesser und einer ersten Steigung und einen zweiten Gewindeabschnitt mit einem zweiten Gewinde mit einem zweiten Außendurchmesser und einer zweiten Steigung auf. Der zweite Gewindeabschnitt ist als Selbstzentriergewindeabschnitt ausgebildet. Das zweite Gewinde weist eine verbreiterte Gewindespitze auf. Der zweite Außendurchmesser des zweiten Gewindes ist kleiner ist als der erste Außendurchmesser des ersten Gewindes. Die erste Steigung des ersten Gewindes und die zweite Steigung des zweiten Gewindes sind unterschiedlich.

Die neue selbstzentrierende Schraube realisiert also die Selbstzentrierungsfunktion ohne Veränderung des "normalen" Gewindes, welches zum Herstellen der eigentlichen Schraubverbindung mit einem korrespondierenden Innengewinde einer Mutter oder eines anderen Bauteils dient. Dieses "normale" Gewinde - bei dem es sich vorzugsweise um ein übliches metrisches Gewinde handelt - muss also gegenüber anderen Schrauben ohne Selbstzentrierfunktion nicht geändert werden, so dass es möglich ist, dieses Gewinde mit einem üblichen oder sogar bereits vorhandenen Rollwerkzeug herzustellen. Die Selbstzentrierfunktion der Schraube ist einem als Selbstzentriergewindeabschnitt ausgebildeten separaten Zentrierabschnitt zugewiesen. Dieser Zentrierabschnitt ist vorzugsweise axial beabstandet von dem "normalen" Gewindeabschnitt und vorzugsweise im Bereich des dem Kopf abgewandten freien Endes der Schraube angeordnet. Es ist jedoch ebenfalls möglich, diesen Zentrierabschnitt axial benachbart bzw. direkt anschließend an das "normale" Gewinde anzuordnen. Der Zentrierabschnitt kann auch weiter in Richtung des Kopfs angeordnet werden, z. B. um im Bereich des freien Endes der Schraube einen zylindrischen oder kegelförmigen Zentrieransatz ohne Gewinde (so genannter "dog point") vorzusehen.

Der Selbstzentriergewindeabschnitt bzw. sein Gewinde weist einen Außendurchmesser auf, der kleiner als der Außendurchmesser des ersten Gewindeabschnitts bzw. dessen Gewindes ist. Im Unterschied zum ersten Gewinde ist die Gewindespitze des zweiten Gewindes verbreitert ausgebildet. Unter einer derartigen verbreiterten Form ist gemäß der Definition dieser Anmeldung eine Form zu verstehen, bei der die vergleichweise scharfkantige Gestaltung der Gewindespitze durch eine flächigere Form ersetzt wird. Bevorzugt ist eine Gestaltung im Sinne eines Rundgewindes. Andere Gestaltungen - z. B. eine abgeflachte Form - sind jedoch ebenfalls möglich. Neben der Gewindespitze können auch die Gewindeflanken eine abgerundete Form besitzen. Das zweite Gewinde weist eine andere Steigung als das erste Gewinde auf.

Bei allen Ausführungsformen der neuen Schraube können der erste und der zweite Gewindeabschnitt axial voneinander beabstandet angeordnet sein.

Diese besondere Form und Anordnung des neuen Selbstzentriergewindeabschnitts führt dazu, dass die unerwünschte elastisch-plastische Verformung der Gewinde, die sich dem Phänomen des "cross-threading" u. a. beim schrägen Ansetzen der Schraube relativ zum Gewinde des korrespondierenden Bauteils anschließt, nicht auftritt und die Schraube dennoch wirtschaftlich herstellbar ist. Das im Außendurchmesser verkleinert und im Bereich seiner Gewindespitze verbreitert ausgebildete zweite Gewinde findet dabei beim fortgesetzten Einschrauben in das korrespondierende "normale" Innengewinde des Bauteils selbsttätig die richtige Relativausrichtung, wobei ein anfänglicher ungewollter Versatz um die halbe Steigung des Gewindes - wie dieser bei einem schrägen Ansetzen der Schraube vorliegen kann - beim fortgesetzten Einschrauben aufgehoben wird, indem die verbreiterte und weniger "hohe" Gewindespitze des zweiten Gewindeabschnitts elastisch über die Gewindespitze des Mutterngewindes in den richtigen vertieften Bereich des korrespondierenden Innengewindes gleiten kann.

Sobald die anfängliche Fehlausrichtung ausgeglichen wurde und der Einschraubvorgang fortgesetzt wird, kommt der Vorteil der unterschiedlichen Steigungen der ineinandergreifenden Gewinde besonders zum Tragen. Diese unterschiedlichen Steigungen führen dazu, dass das anfänglich aufgrund des verringerten Außendurchmessers des zweiten Gewindeabschnitts vorhandene Spiel zwischen dem zweiten Gewinde und dem korrespondierenden Innengewinde nach und nach kleiner wird. Anders gesagt zielt diese unterschiedliche Steigung tendenziell in Richtung einer Klemmung der ineinandergreifenden Gewinde ab, wobei der Klemmbereich jedoch nicht erreicht wird, sondern stattdessen der Eingriff des "normalen" ersten Gewindeabschnitts in das korrespondierende Innengewinde des Bauteils erfolgt.

Um diese beiden separaten Gewindeabschnitte mit unterschiedlicher Ausbildung und Funktionalität wirtschaftlich fertigen zu können, entspricht der axiale Abstand zwischen dem ersten und dem zweiten Gewindeabschnitt - sofern dieser vorhanden ist - insbesondere mindestens der halben Steigung des ersten Gewindeabschnitts. Der Abstand kann auch etwa mindestens der Steigung und insbesondere etwa dem Doppelten der Steigung oder mehr entsprechen. Dieser axiale Abstand stellt sicher, dass die beiden Gewindeabschnitte mit unterschiedlicher Steigung und Geometrie besonders gut mit separaten Werkzeugen wirtschaftlich herstellbar sind.

Vorzugsweise weist der zweite Gewindeabschnitt eine größere Steigung als der erste Gewindeabschnitt auf. Dies ist vorteilhaft, da das zweite Gewinde somit z. B. als robustes Rundgewinde mit einer vergleichsweise größeren Steigung ausgebildet sein kann. Ein solches Gewinde ist unempfindlicher gegen Beschädigungen. Es ist jedoch ebenfalls möglich, die Steigung des zweiten Gewindeabschnitts kleiner als die des ersten Gewindeabschnitts auszubilden. Bei beiden Konstellationen können insbesondere Verhältnisse zwischen den Steigungen verwendet werden, die etwa 1,02 bis 1,5 betragen. In Abstimmung mit den Verhältnissen der Außen- und Flankendurchmesser sowie der Länge des zweiten Gewindeabschnitts ergibt sich bei einem solchen Steigungsverhältnis die gewünschte Reduzierung des Spiels zwischen den Gewinden, ohne dass eine ungewollte Klemmwirkung eintritt.

Der Kerndurchmesser des ersten Gewindes kann größer als der Kerndurchmesser des zweiten Gewindes sein. Beide Gewindeabschnitte können separat und jeweils in nur einem Arbeitsgang durch Rollen gefertigt werden. Der zweite Gewindeabschnitt wird dabei auf einem Schaftabschnitt aufgebracht, der einen kleineren Rohschaftdurchmesser als der Abschnitt besitzt, in dem der erste Gewindeabschnitt durch Rollen aufgebracht wird. Die Verhältnisse sind dabei insbesondere so gewählt, dass das erste Gewinde einen Flankendurchmesser besitzt, der etwa gleich groß ist wie der zweite Außendurchmesser des zweiten Gewindes.

Es versteht sich, dass die Schraube normalerweise einen Kopf und ein dem Kopf abgewandtes freies Ende aufweist. Der zweite Gewindeabschnitt ist dabei vorzugsweise dem freien Ende zugewandt, und der erste Gewindeabschnitt ist zwischen dem zweiten Gewindeabschnitt und dem Kopf angeordnet. Die Schraube kann auch beispielsweise als Mittelbundschraube ausgebildet sein und/oder weitere Abschnitte - wie z. B. einen weiteren Gewindeabschnitt oder einen Presspassabschnitt - aufweisen.

Die Erfindung betrifft auch ein Verfahren zur Herstellung einer selbstzentrierenden Schraube. Zunächst wird ein so genannter Draht zur Erzeugung eines Schraubenrohlings mit einem Kopf, einem ersten Rohschaftabschnitt mit einem ersten Durchmesser und einem zweiten Rohschaftabschnitt mit einem zweiten Durchmesser durch Kaltumformen hergestellt. Der erste Durchmesser ist dabei größer als der zweite Durchmesser. Ein erster Gewindeabschnitt mit einem ersten Gewinde mit einem ersten Außendurchmesser und einer ersten Steigung wird in dem ersten Rohschaftabschnitt gerollt. Ein zweiter Gewindeabschnitt mit einem zweiten Gewinde mit einem zweiten Außendurchmesser und einer zweiten Steigung wird in dem zweiten Rohschaftabschnitt gerollt. Der zweite Gewindeabschnitt ist als Selbstzentriergewindeabschnitt ausgebildet. Das zweite Gewinde weist eine verbreiterte Gewindespitze auf. Der zweite Außendurchmesser des zweiten Gewindes ist kleiner als der erste Außendurchmesser des ersten Gewindes. Die erste Steigung des ersten Gewindes und die zweite Steigung des zweiten Gewindes sind unterschiedlich.

Die Schraube besteht insbesondere aus Stahl. Sie kann jedoch auch aus Aluminium oder anderen Materialien, wie z. B. Titan bestehen. Insbesondere handelt es sich um eine hochfeste Schraube, z. B. für die Automobilindustrie. Die Schraube kann einen verrundeten oder konischen "dog point" aufweisen. Das zweite Gewinde kann auch eine diskontinuierliche Steigung besitzen.

Mit dem neuen Verfahren ergibt sich die vorteilhafte Möglichkeit, das Rollen des ersten Gewindeabschnitts mit einem ersten Rollwerkzeug und das Rollen des zweiten Gewindeabschnitts mit einem zweiten Rollwerkzeug durchzuführen. Die Rollwerkzeuge können somit als separate Werkzeuge ausgebildet sein und müssen keinen Übergangsbereich besitzen, mit dem eine Übergangsgeometrie zwischen den beiden Gewindeabschnitten gefertigt wird, wie dies aus dem Stand der Technik bekannt ist. Beide Werkzeuge können z. B. durch Verschrauben auch zu einem einzigen Werkzeug kombiniert werden. Damit ergibt sich die Möglichkeit, beide Gewinde in einem Arbeitsgang zu rollen.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Seitenansicht eines ersten Ausführungsbeispiels der neuen selbstzentrierenden Schraube.
- **Fig. 2**: zeigt eine Schnittansicht der in ein Bauteil eingeschraubten Schraube gemäß Fig. 1.
- **Fig. 3**: zeigt eine teilweise geschnittene Seitenansicht der unter einer Schrägstellung in ein Bauteil einragenden Schraube gemäß Fig. 1.
- **Fig. 4**: zeigt eine Seitenansicht eines zweiten Ausführungsbeispiels der neuen selbstzentrierenden Schraube.
- **Fig. 5**: zeigt eine teilweise geschnittene Seitenansicht der unter einer Schrägstellung in ein Bauteil einragenden Schraube gemäß Fig. 4.
- **Fig. 6**: zeigt eine Seitenansicht eines dritten Ausführungsbeispiels der neuen selbstzentrierenden Schraube.
- **Fig. 7**: zeigt eine geschnittene Detailansicht eines ersten Ausführungsbeispiels der beiden Gewindeabschnitte der neuen Schraube sowie des zwischen diesen vorgesehenen Schaftabschnitts.
- **Fig. 8**: zeigt eine geschnittene Detailansicht eines zweiten Ausführungsbeispiels der beiden Gewindeabschnitte der neuen Schraube sowie des zwischen diesen vorgesehenen Schaftabschnitts.
- **Fig. 9**: zeigt eine geschnittene Detailansicht einer ersten beispielhaften Ausführungsform des zweiten Gewindeabschnitts der neuen Schraube.
- **Fig. 10**: zeigt eine geschnittene Detailansicht einer zweiten beispielhaften Ausführungsform des zweiten Gewindeabschnitts der neuen Schraube.
- **Fig. 11**: zeigt eine geschnittene Detailansicht einer dritten beispielhaften Ausführungsform des zweiten Gewindeabschnitts der neuen Schraube.

- **Fig. 12**: zeigt eine geschnittene Detailansicht einer vierten beispielhaften Ausführungsform des zweiten Gewindeabschnitts der neuen Schraube.
- **Fig. 13**: zeigt ein Messergebnis betreffend die konkreten Abmessungen der neuen Schraube anhand des Beispiels einer Schraube M12x1,5.
- **Fig. 14**: zeigt eine Seitenansicht des zu der Schraube gemäß Fig. 1 zugehörigen Schraubenrohlings.
- **Fig. 15**: zeigt eine Seitenansicht eines vierten Ausführungsbeispiels der neuen selbstzentrierenden Schraube.

### FIGURENBESCHREIBUNG

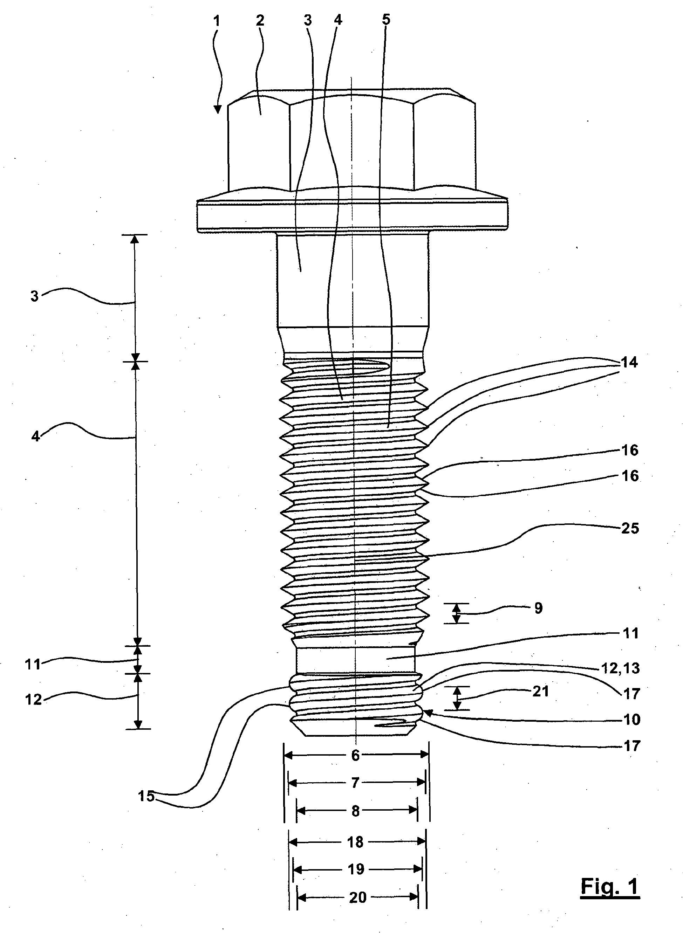

**Fig. 1** zeigt eine Seitenansicht eines ersten Ausführungsbeispiels einer neuen selbstzentrierenden Schraube 1. Die Schraube 1 weist einen Kopf 2, einen Schaftabschnitt 3 und einen ersten Gewindeabschnitt 4 auf. Der erste Gewindeabschnitt 4 weist ein Gewinde 5 auf, welches hier in üblicher Weise als metrisches Gewinde ausgebildet ist. Das erste Gewinde 5 besitzt einen ersten Außendurchmesser 6, einen ersten Flankendurchmesser 7, einen ersten Kerndurchmesser 8, eine erste Steigung 9, eine erste Gewindespitze 14 und erste Gewindeflanken 16. Die scharfkantige Ausbildung der Gewindespitze 14 ist dabei etwas übertrieben dargestellt. Nach dem Einlauf des ersten Gewindeabschnitts 4 in Richtung auf das dem Kopf 2 abgewandte freie Ende 10 der Schraube 1 schließt sich ein Schaftabschnitt 11 an.

Im Anschluss daran beginnt der Einlauf bzw. Auslauf eines zweiten Gewindeabschnitts 12 mit einem zweiten Gewinde 13. Der zweite Gewindeabschnitts 12 ist somit hier axial beabstandet zum ersten Gewindeabschnitt 4 angeordnet. Das zweite Gewinde 13 ist radial durchgehend ausgebildet, d. h. es windet sich kontinuierlich um die Achse 25 der Schraube 1. Im Gegensatz zu der in üblicher Weise vergleichsweise scharfkantig ausgebildeten Gewindespitze 14 des "normalen" ersten Gewindes 5 ist die Gewindespitze 15 des zweiten Gewindes 13 verbreitert ausgebildet. Bei diesem Beispiel ist sie verrundet bzw. abgerundet. Wie in Fig. 1 weiterhin gut erkennbar ist, sind im Unterschied zu den geraden Gewindeflanken 16 des ersten Gewindes 5 beim zweiten Gewinde 13 auch die Gewindeflanken 17 ganz oder teilweise abgerundet ausgebildet. Das zweite Gewinde 13 weist weiterhin einen zweiten Außendurchmesser 18, einen zweiten Flankendurchmesser 19, einen zweiten Kerndurchmesser 20 und eine zweite Steigung 21 auf. Der zweite Außendurchmesser 18 ist dabei kleiner als der erste Außendurchmesser 6, der zweite Flankendurchmesser 19 ist kleiner als der erste Flankendurchmesser 7 und der zweite Kerndurchmesser 20 ist kleiner als der erste Kerndurchmesser 8. Die zweite Steigung 21 hingegen ist größer als die erste Steigung 9. Das Verhältnis der Steigungen könnte jedoch auch umgekehrt sein.

Die Wirkungsweise der neuen Schraube 1 als selbstzentrierende Schraube mit dem zweiten Gewindeabschnitt 12 als Selbstzentriergewindeabschnitt wird nun im Folgenden unter Bezugnahme auf die **Fig. 1****,** **2** **und** **3** weiter beschrieben.

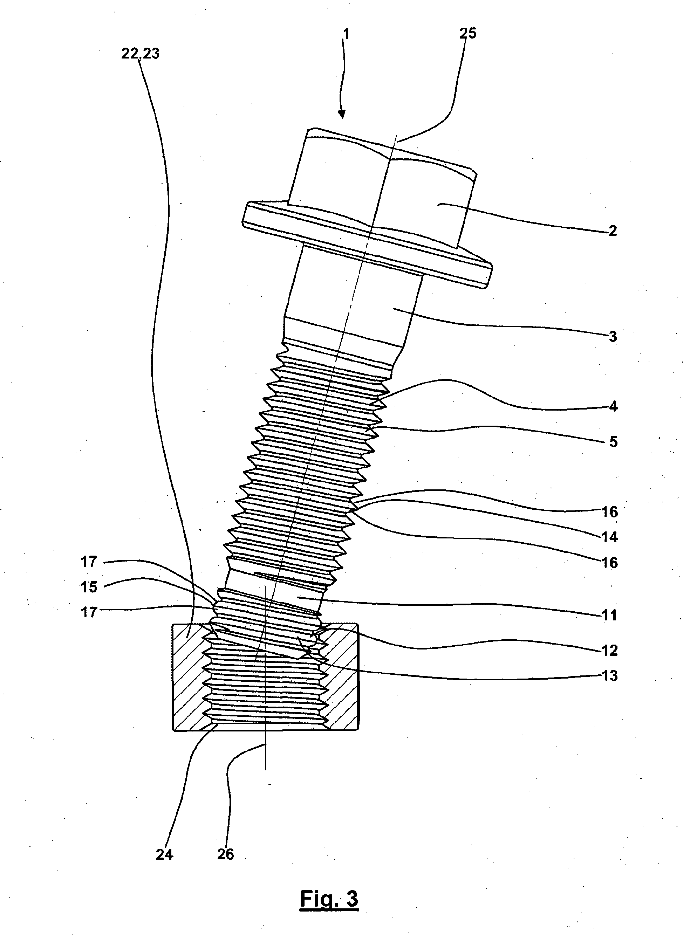

In den Fig. 2 und 3 sind aus Gründen der Übersichtlichkeit nicht alle Bezugszeichen aus Fig. 1 wiederholt eingetragen. Dies gilt sinngemäß auch für die folgenden Figuren. Es wird diesbezüglich auf Fig. 1 verwiesen. In den Fig. 2 und 3 ist das Zusammenwirken der selbstzentrierenden Schraube 1 gemäß Fig. 1 mit einem korrespondierenden Bauteil 22 gezeigt. Bei dem Bauteil 22 kann es sich um eine Mutter 23 oder ein beliebiges anderes Bauteil mit einem Innengewinde 24 handeln. Bei dem Innengewinde 24 handelt es sich ebenfalls um ein metrisches Gewinde, welches korrespondierend zum ersten Gewinde 5 gewählt ist.

Fig. 3 zeigt dabei den Beginn des Einschraubvorgangs der Schraube 1 in das Innengewinde 24 des Bauteils 22. Dabei wird die Schraube 1 mit einer Fehlausrichtung - d. h. schräg - an dem Bauteil 22 angesetzt. Folglich überdecken sich die Achsen 25 der Schraube 1 und 26 des Bauteils 22 nicht, sondern sind unter einem Winkel von hier etwa 15° zueinander ausgerichtet. Somit befinden sich zunächst die Gewindespitze 15 und die Gewindeflanken 17 des zweiten Gewindes 13 - hier im rechten Bereich von Fig. 3 dargestellt - teilweise nicht in den korrespondierenden Vertiefungen des Innengewindes 24. Aufgrund der verbreiterten bzw. abgerundeten Gestalt der Gewindespitze 15 des zweiten Gewindes 13 und des reduzierten zweiten Außendurchmessers 18 sind die Gewindespitze 15 und die Gewindeflanken 17 jedoch beim fortgesetzten Einschraubvorgang in der Lage, in die korrekte korrespondierende Vertiefung des Innengewindes 24 zu gleiten bzw. überzuspringen, ohne dass eine plastische Verformung stattfindet. Durch diesen Vorgang findet eine automatische Ausrichtung der Schraube 1 relativ zu dem Bauteil 22 statt, so dass sich der zwischen den Achsen 25, 26 zunächst vorhandene Winkel einem Winkel von 0° annähert.

Aufgrund des reduzierten zweiten Außendurchmessers 18 des zweiten Gewindes 13 würde nun ein vergleichsweise großes Spiel in der Verbindung der Gewinde 12, 24 vorliegen. Diesem Spiel wirkt jedoch die Tatsache entgegen, dass die erste Steigung 9 des ersten Gewindes 5 unterschiedlich zu der zweiten Steigung 21 des zweiten Gewindes 13 gewählt ist. Dieser Steigungsunterschied führt beim fortgesetzten Einschrauben des zweiten Gewindeabschnitts 12 in das Innengewinde 24 dazu, dass dieses Spiel sukzessive verkleinert wird. Der Steigungsunterschied ist dabei in Kombination mit den sonstigen Abmaßen der Gewinde 12, 24 so gewählt, dass der zweite Gewindeabschnitt 12 vollständig durch das Bauteil 22 hindurchgeschraubt werden kann, ohne dass es zu einer Verklemmung kommt. Während dieses Einschraubvorgangs greift dann auch das erste Gewinde 5 in das Innengewinde 24 ein. Da diese beiden Gewinde 5, 24 aufeinander abgestimmt sind und somit auch dieselbe Steigung besitzen, wird hierdurch die eigentlich gewollte übliche Schraubverbindung erzeugt. Die zusätzliche, vorangeschaltete Schraubverbindung zwischen dem zweiten Gewinde 5 und dem Innengewinde 24 hat also lediglich der Ausrichtung der Schraube 1 relativ zu dem Bauteil 22 gedient, damit beim Einschrauben des ersten Gewindeabschnitts 4 in das Innengewinde 24 des Bauteils 22 keines dieser Gewinde 5, 24 beschädigt wird.

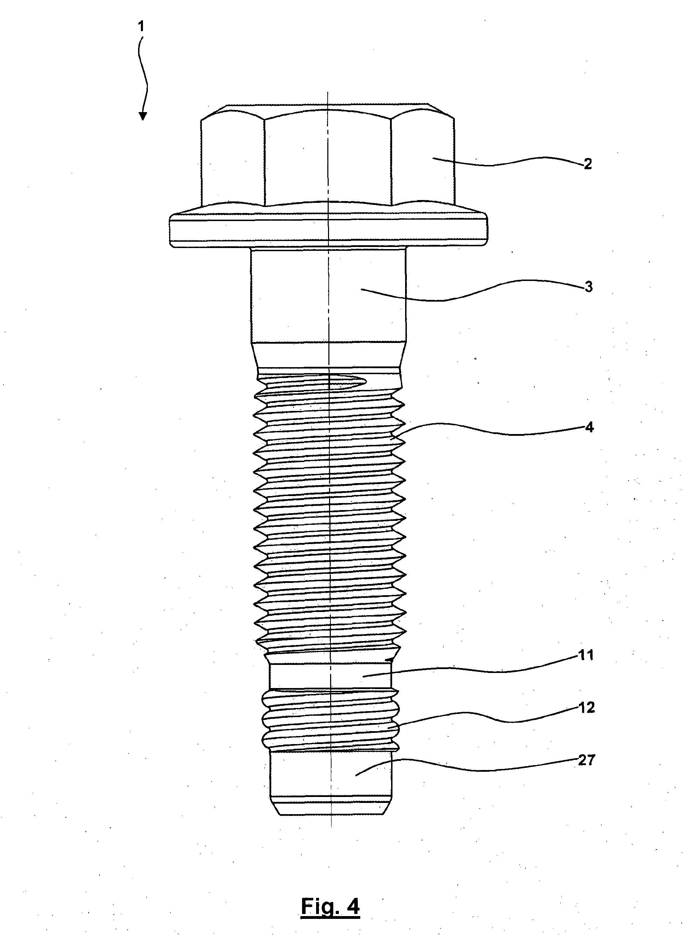

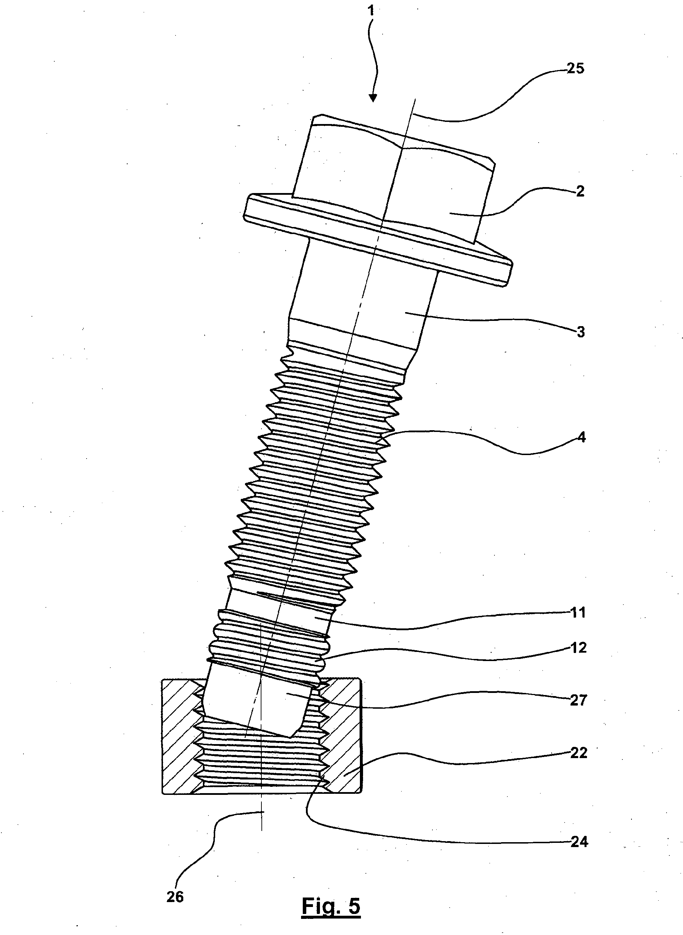

**Fig. 4** zeigt eine Seitenansicht eines zweiten Ausführungsbeispiels der neuen selbstzentrierenden Schraube 1. Da diese Schraube 1 hinsichtlich der meisten Aspekte übereinstimmend zu der Ausführungsform gemäß Fig. 1 ausgebildet ist, wird auf die oberhalb angegebenen Beschreibungen zu den Fig. 1-3 Bezug genommen. Auch Fig. 4 enthält daher nur die allerwichtigsten Bezugszeichen bzw. solche, die geänderte Teile betreffen. Im Unterschied zu der in Fig. 1 dargestellten Ausführungsform der Schraube 1 weist die in Fig. 4 dargestellte Ausführungsform der Schraube 1 einen im Bereich des freien Endes 10 zusätzlich angeordneten Zentrieransatz 27 auf. Wie insbesondere **Fig. 5** erkennen lässt, dient dieser Zentrieransatz 27 einer ersten Vorausrichtung der Achse 25 der Schraube 1 relativ zu der Achse 26 des Bauteils 22, bevor der zweite Gewindeabschnitt 12 mit seinem Gewinde 13 in das Innengewinde 24 eingreift.

**Fig. 6** zeigt ein drittes Ausführungsbeispiels der neuen selbstzentrierenden Schraube 1. Bei der in Fig. 6 gezeigten Schraube 1 handelt es sich um eine so genannte Mittelbundschraube. Diese endet in einer Richtung nicht wie die anderen Ausführungsformen in dem Kopf 2, sondern setzt sich dort in einen weiteren Schaftabschnitt 28 und einen dritten Gewindeabschnitt 29 fort, der sich hier bis zum weiteren freien Ende 30 erstreckt. Es versteht sich, dass dieser dritte Gewindeabschnitt 29 zum Herstellen einer weiteren Schraubverbindung dient. Es wäre ebenfalls möglich, nach Anordnung eines weiteren Schaftabschnitts einen weiteren Gewindeabschnitt anzuordnen, der wie der zweite Gewindeabschnitt 12 als Selbstzentriergewindeabschnitt ausgebildet ist.

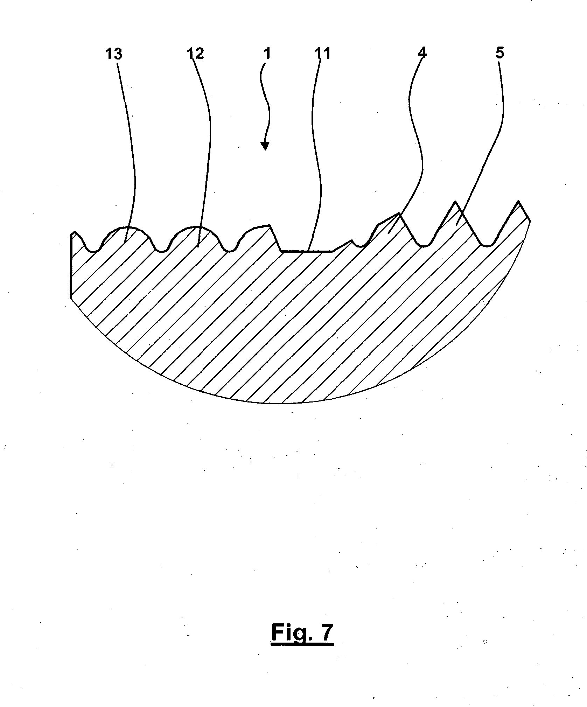

**Fig. 7** zeigt in einer vergrößerten Schnittdarstellung einen Teil einer Schraube 1 mit einem Teil des ersten Gewindeabschnitts 4, des zweiten Gewindeabschnitts 12 sowie des zwischen diesen angeordneten Schaftabschnitts 11. Diese Darstellung lässt insbesondere die verrundete Gestaltung des zweiten Gewindes 12 erkennen. Es ist darauf hinzuweisen, dass die sehr scharfkantige Gestaltung des Gewindes 5 zeichnerisch übertrieben und so in der Realität nicht herstellbar ist. In Fig. 7 entspricht die axiale Länge des Schaftabschnitts 11 etwa der halben Steigung des ersten Gewindes 5 des ersten Gewindeabschnitts 4.

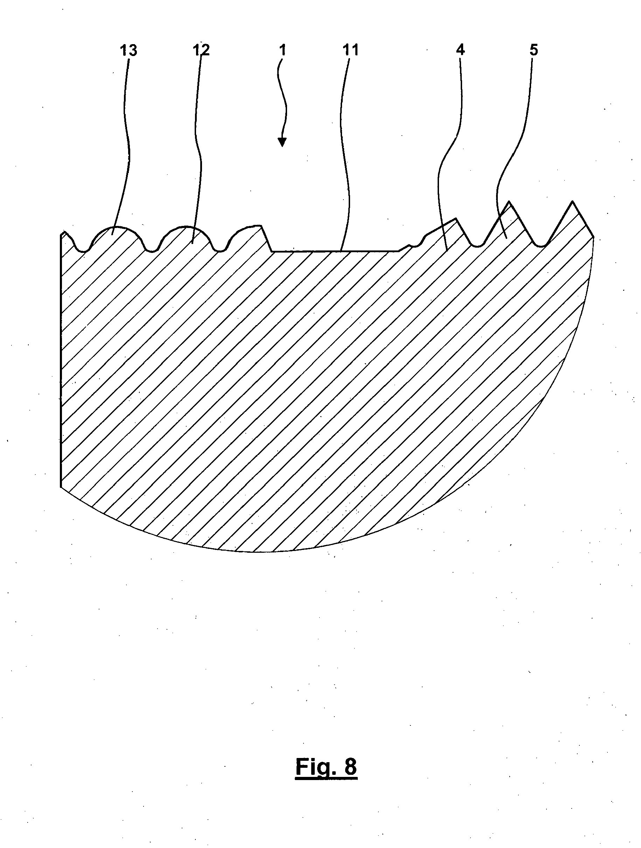

**Fig. 8** zeigt eine der Darstellung von Fig. 7 entsprechende Darstellung eines weiteren Ausführungsbeispiels der Schraube 1. Hierbei ist die axiale Länge des Schaftabschnitts 11 - d. h. der axiale Abstand zwischen dem ersten Gewindeabschnitt 4 und dem zweiten Gewindeabschnitt 12 - größer gewählt. Er ist hierbei größer als die erste Steigung 9 des ersten Gewindeabschnitts 4. Es versteht sich, dass auch noch größere axiale Abstände gewählt werden können oder ganz auf einen solchen axialen Abstand verzichtet werden kann.

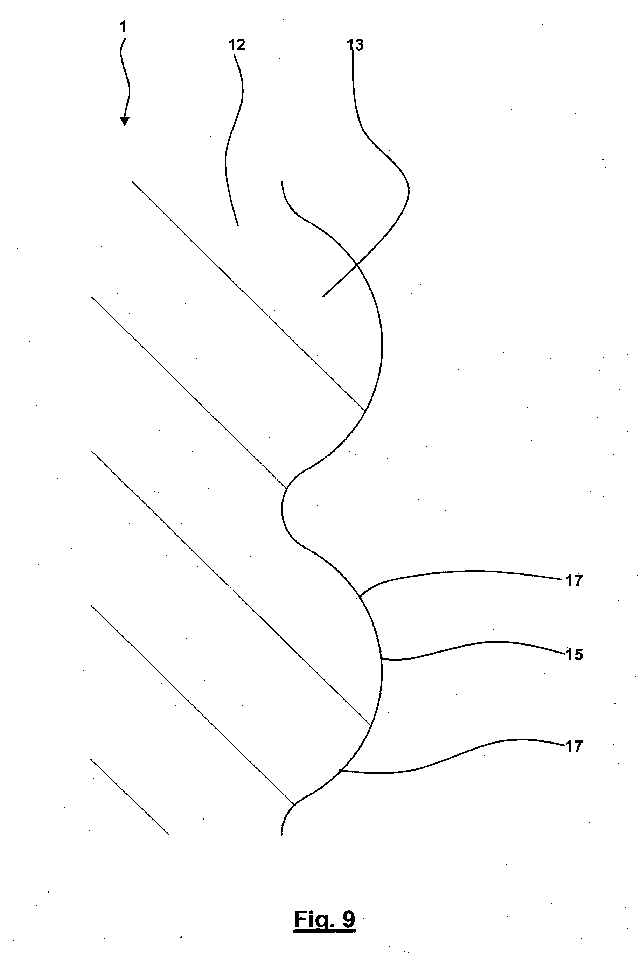

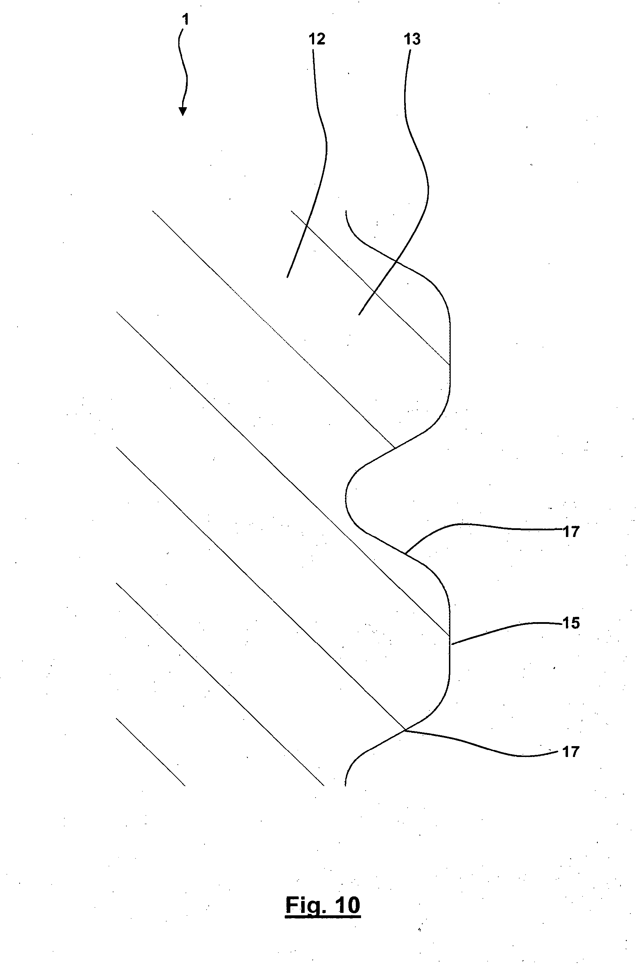

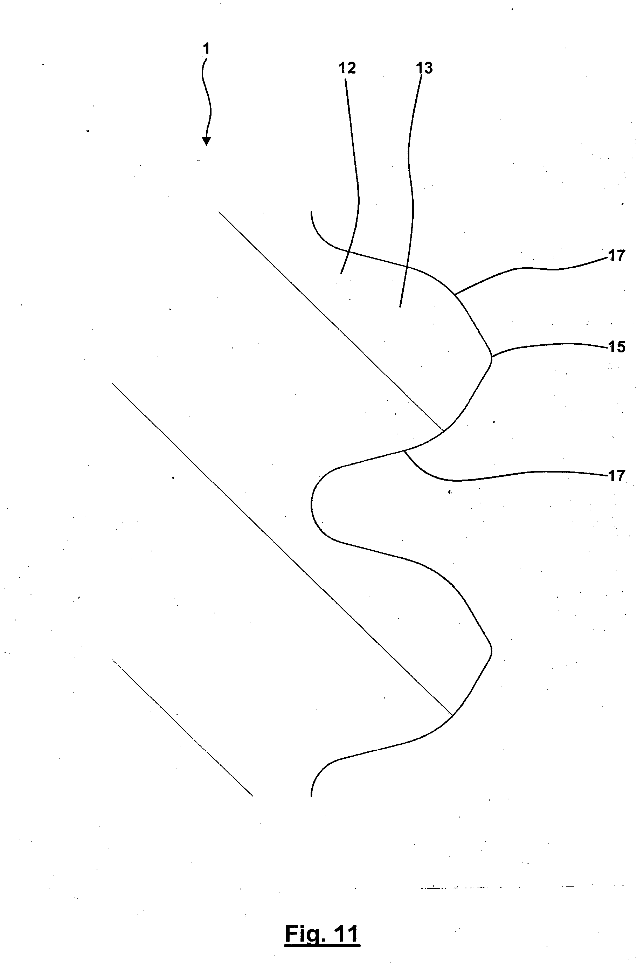

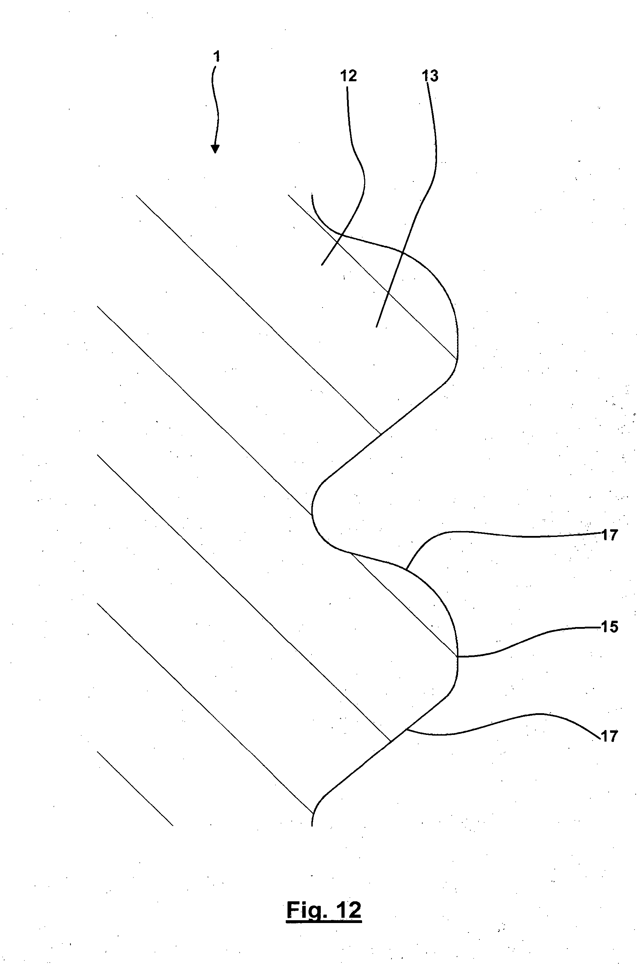

Die **Fig. 9-12** zeigen geschnittene Detailansichten beispielhafter Ausführungsformen des zweiten Gewindeabschnitts 12 mit dem Gewinde 13. Fig. 9 zeigt dabei eine vergleichsweise regelmäßig abgerundete Form in den hervorstehenden Bereichen des Gewindes 13. Der zeichnerisch ideal dargestellte Radius der hervorstehenden Bereiche ist dabei größer als der Radius der vertieften Bereiche des Gewindes 13. Hier weisen sowohl die Gewindespitze 15 als auch die Gewindeflanken 17 eine durchgängig runde Form auf. Die Ausführungsform der Schraube 1 gemäß Fig. 10 weist eine plateauartig abgeflachte Gewindespitze 15 auf. Auch unter einer solchen abgeflachten Ausbildung ist im Sinne der vorliegenden Erfindung eine verbreiterte Gewindespitze 17 zu verstehen. Weitere mögliche beispielhafte Ausgestaltungen der Gewindespitze 15 und der Gewindeflanken 17 sind in den Fig. 11 und 12 dargestellt. Es kann sich also bei dem Gewinde 13 um ein Rundgewinde oder ein anderes Gewinde handeln, bei dem im Vergleich zu einem "normalen" Gewinde die scharfkantige Gestaltung der Gewindespitze 15 aufgehoben ist, indem diese verbreitert wurde.

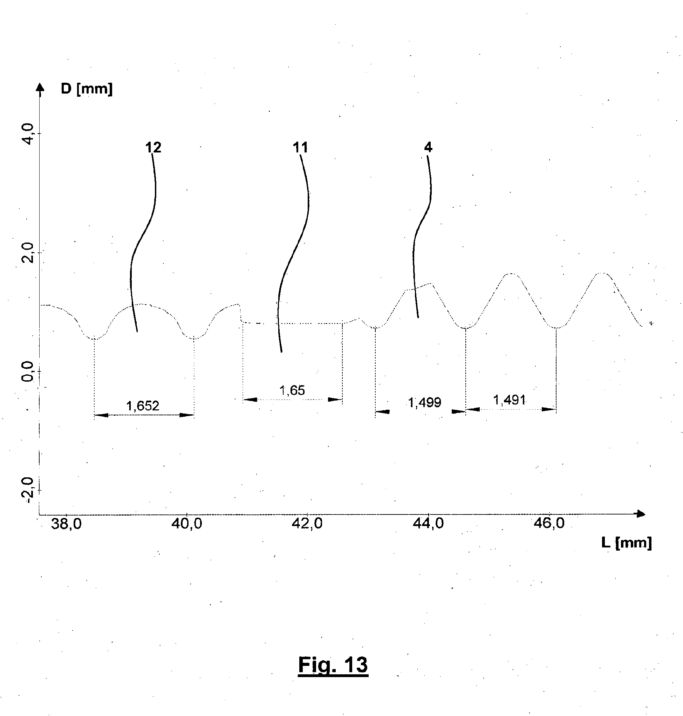

**Fig. 13** zeigt ein Messergebnis der Abmessungen einer neuen Schraube 1 anhand des Beispiels einer konkreten Schraube M12x1,5. Das erste Gewinde 5 weist eine Steigung 9 von etwa 1,5 mm auf. Der sich anschließende Schaftabschnitt 11 weist eine Länge von etwa 1,7 mm auf. Die zweite Steigung 21 des zweiten Gewindes 13 besitzt eine Steigung von etwa 1,65 mm. Der erste Außendurchmesser 6 des ersten Gewindes 5 beträgt - wie bei einem M12-Gewinde üblich - etwa 12,0 mm. Der reduzierte zweite Außendurchmesser 18 des zweiten Gewindes 13 beträgt etwa 10,7 mm und hat eine Länge von etwa 9 mm.

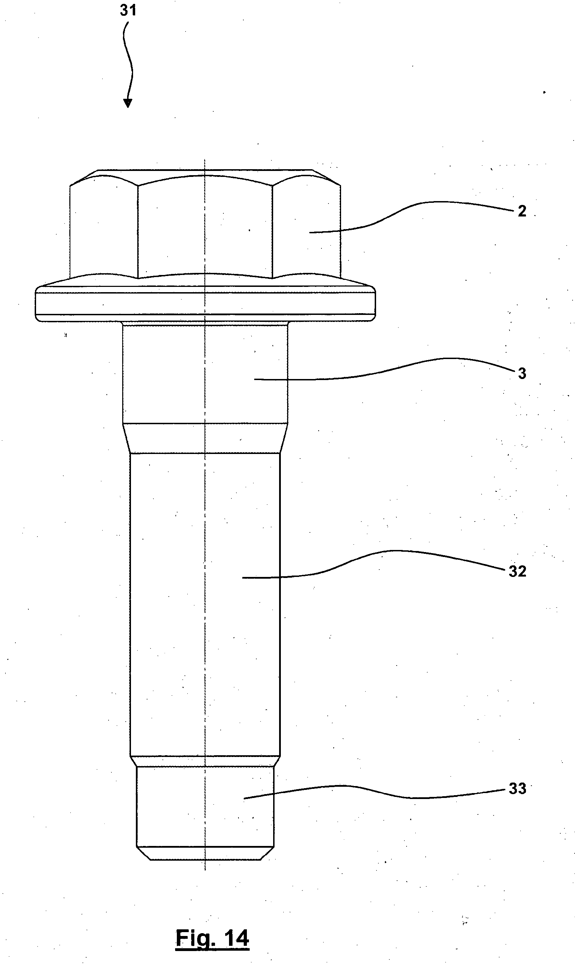

**Fig. 14** zeigt eine Seitenansicht des zu der Schraube gemäß Fig. 1 zugehörigen Schraubenrohlings 31, wie dieser ausgehend von einem so genannten Draht durch Kaltumformen hergestellt wird. Der Schraubenrohling 31 weist den Kopf 2, einen ersten Rohschaftabschnitt 32 mit einem ersten Durchmesser und einen zweiten Rohschaftabschnitt 33 mit einem zweiten Durchmesser auf, wobei der erste Durchmesser größer als der zweite Durchmesser ist. Ausgehend von diesem Schraubenrohling 31 wird der erste Gewindeabschnitt 4 mit dem ersten Gewinde 5 (siehe Fig. 1) in dem ersten Rohschaftabschnitt 32 durch Rollen erzeugt. Weiterhin wird der zweite Gewindeabschnitt 12 mit einem zweiten Gewinde 13 (siehe Fig. 1) in dem zweiten Rohschaftabschnitt 33 durch Rollen erzeugt.

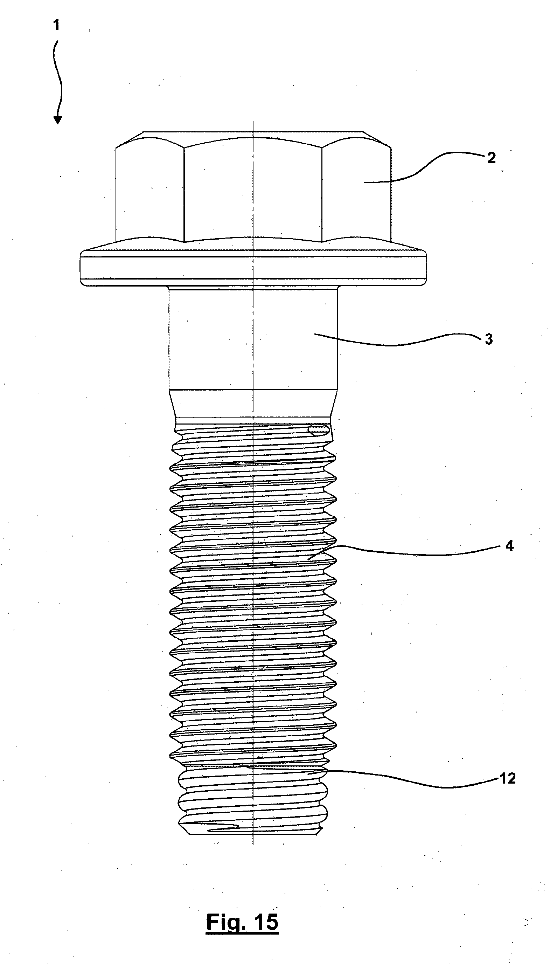

**Fig. 15** zeigt schließlich eine Seitenansicht eines vierten Ausführungsbeispiels der neuen selbstzentrierenden Schraube 1. Da diese Schraube 1 hinsichtlich der meisten Aspekte übereinstimmend zu der Ausführungsform gemäß Fig. 1 ausgebildet ist, wird auf die oberhalb angegebenen Beschreibungen zu den Fig. 1-3 Bezug genommen. Der zweite Gewindeabschnitts 12 schließt hier direkt - d. h. ohne axialen Abstand - an den ersten Gewindeabschnitt 4 an. Die Gewinde 5, 13 weisen jedoch unterschiedliche Steigungen 9, 21 auf.

### BEZUGSZEICHENLISTE

- 1: Schraube
- 2: Kopf
- 3: Schaftabschnitt
- 4: Erster Gewindeabschnitt
- 5: Erstes Gewinde
- 6: Erster Außendurchmesser
- 7: Erster Flankendurchmesser
- 8: Erster Kerndurchmesser
- 9: Erste Steigung
- 10: Freies Ende
- 11: Schaftabschnitt
- 12: Zweiter Gewindeabschnitt
- 13: Zweites Gewinde
- 14: Gewindespitze
- 15: Gewindespitze
- 16: Gewindeflanke
- 17: Gewindeflanke
- 18: Zweiter Außendurchmesser
- 19: Zweiter Flankendurchmesser
- 20: Zweiter Kerndurchmesser
- 21: Zweite Steigung
- 22: Bauteil
- 23: Mutter
- 24: Innengewinde
- 25: Achse
- 26: Achse
- 27: Zentrieransatz
- 28: Schaftabschnitt
- 29: Dritter Gewindeabschnitt
- 30: Freies Ende

- 31: Schraubenrohling
- 32: Erster Rohschaftabschnitt
- 33: Zweiter Rohschaftabschnitt

## Patentansprüche

1. Schraube (1), mit
einem ersten Gewindeabschnitt (4) mit einem ersten Gewinde (5) mit einem ersten Außendurchmesser (6) und einer ersten Steigung (9) zum Herstellen einer Schraubverbindung mit einem korrespondierenden Innengewinde (24) einer Mutter (23) oder eines anderen Bauteils (22);
einem zweiten Gewindeabschnitt (12) mit einem zweiten Gewinde (13) mit einem zweiten Außendurchmesser (18) und einer zweiten Steigung (21),
wobei der zweite Gewindeabschnitt (12) als Selbstzentriergewindeabschnitt ausgebildet ist,
wobei das zweite Gewinde (13) eine verbreiterte Gewindespitze (15) aufweist, wobei der zweite Außendurchmesser (18) des zweiten Gewindes (13) kleiner ist als der erste Außendurchmesser (6) des ersten Gewindes (5), **dadurch gekennzeichnet, dass**
die erste Steigung (9) des ersten Gewindes (5) und die zweite Steigung (21) des zweiten Gewindes (13) unterschiedlich sind.

2. Schraube (1) nach Anspruch 1, **dadurch gekennzeichnet, dass** der erste und der zweite Gewindeabschnitt (4, 12) axial voneinander beabstandet angeordnet sind.

3. Schraube (1) nach Anspruch 2, **dadurch gekennzeichnet, dass** der axiale Abstand zwischen dem ersten und dem zweiten Gewindeabschnitt (4, 12) mindestens der halben Steigung (9) des ersten Gewindeabschnitts (4) entspricht.

4. Schraube (1) nach mindestens einem der Ansprüche 1 bis 3 **dadurch gekennzeichnet, dass** der zweite Gewindeabschnitt (12) eine größere Steigung als der erste Gewindeabschnitt (4) aufweist.

5. Schraube (1) nach mindestens einem der Ansprüche 1 bis 4, **dadurch gekennzeichnet dass** das Verhältnis zwischen den Steigungen (9, 21; 21, 9) etwa 1,02 bis 1,5 beträgt.

6. Schraube (1) nach mindestens einem der Ansprüche 1 bis 5, **dadurch gekennzeichnet, dass** das erste Gewinde (5) einen ersten Kerndurchmesser (8) und das zweite Gewinde (13) einen zweiten Kerndurchmesser (20) besitzt, wobei der erste Kerndurchmesser (8) größer als der zweite Kerndurchmesser (20) ist.

7. Schraube (1) nach mindestens einem der Ansprüche 1 bis 6, **dadurch gekennzeichnet, dass** das erste Gewinde (5) einen ersten Flankendurchmesser (7) besitzt, der etwa gleich groß ist wie der zweite Außendurchmesser (18) des zweiten Gewindes (13).

8. Schraube (1) nach mindestens einem der Ansprüche 1 bis 7, **dadurch gekennzeichnet, dass** die Gewindespitze (15) des zweiten Gewindes (13) verrundet ausgebildet ist.

9. Schraube (1) nach mindestens einem der Ansprüche 1 bis 7, **dadurch gekennzeichnet, dass** die Gewindespitze (15) des zweiten Gewindes (13) abgeflacht ausgebildet ist.

10. Schraube (1) nach mindestens einem der Ansprüche 1 bis 9, **dadurch gekennzeichnet, dass** das zweite Gewinde (13) Flanken (17) besitzt, die verrundet ausgebildet sind.

11. Schraube (1) nach Anspruch mindestens einem der Ansprüche 1 bis 10, **dadurch gekennzeichnet, dass** die Schraube (1) einen Kopf (2) und ein dem Kopf (2) abgewandtes freies Ende (10) aufweist, wobei der zweite Gewindeabschnitt (12) dem freien Ende (10) zugewandt und der erste Gewindeabschnitt (4) zwischen dem zweiten Gewindeabschnitt (12) und dem Kopf (2) angeordnet ist.

12. Verfahren zum Herstellen einer Schraube (1), insbesondere einer Schraube (1) nach mindestens einem der Ansprüche 1 bis 11, **gekennzeichnet durch**
Kaltumformen eines Drahts zur Erzeugung eines Schraubenrohlings (31) mit einem Kopf (2), einem ersten Rohschaftabschnitt (32) mit einem ersten Durchmesser und einem zweiten Rohschaftabschnitt (33) mit einem zweiten Durchmesser, wobei der erste Durchmesser größer als der zweite Durchmesser ist,
Rollen eines ersten Gewindeabschnitts (4) mit einem ersten Gewinde (5) mit einem ersten Außendurchmesser (6) und einer ersten Steigung (9) in dem ersten Rohschaftabschnitt (32), wobei der erste Gewindeabschnitt (4) zum Herstellen einer Schraubverbindung mit einem korrespondierenden Innengewinde (24) einer Mutter (23) oder eines anderen Bauteils (22) dient;
Rollen eines zweiten Gewindeabschnitts (12) mit einem zweiten Gewinde (13) mit einem zweiten Außendurchmesser (18) und einer zweiten Steigung (21) in dem zweiten Rohschaftabschnitt (33),
wobei der zweite Gewindeabschnitt (12) als Selbstzentriergewindeabschnitt ausgebildet ist,
wobei das zweite Gewinde (13) eine verbreiterte Gewindespitze (15) aufweist, wobei der zweite Außendurchmesser (18) des zweiten Gewindes (13) kleiner ist als der erste Außendurchmesser (6) des ersten Gewindes (5), und
wobei die erste Steigung (9) des ersten Gewindes (5) und die zweite Steigung (21) des zweiten Gewindes (13) unterschiedlich sind.

13. Verfahren nach Anspruch 12, **dadurch gekennzeichnet, dass** das Rollen des ersten Gewindeabschnitts (4) mit einem ersten Rollwerkzeug und das Rollen des zweiten Gewindeabschnitts (12) mit einem zweiten Rollwerkzeug erfolgt, wobei die Rollwerkzeuge als separate Werkzeuge ausgebildet sind.

## Claims

1. A screw (1), comprising
a first threaded portion (4) with a first thread (5) having a first outer diameter (6) and a first pitch (9) for realizing a screwed connection with a corresponding inner thread (24) of a nut (23) or a different component (22);
a second threaded portion (12) with a second thread (13) having a second outer diameter (18) and a second pitch (21),
wherein the second threaded portion (12) is designed as a self-centring threaded portion,
wherein the second thread (13) has a broadened thread tip (15),
wherein the second outer diameter (18) of the second thread (13) is smaller than the first outer diameter (6) of the first thread (5), **characterised in that** the first pitch (9) of the first thread (5) and the second pitch (21) of the second thread (13) are different.

2. The screw (1) of claim 1, **characterised in that** the first and the second threaded portion (4, 12) are arranged in an axially spaced apart manner.

3. The screw (1) of claim 2, **characterised in that** the axial distance between the first and the second threaded portion (4, 12) corresponds to at least have the pitch (9) of the first threaded portion (4).

4. The screw (1) of at least one of claims 1 to 3, **characterised in that** the second threaded portion (12) has a greater pitch than the first threaded portion (4).

5. The screw (1) of at least one of claims 1 to 4, **characterised in that** the ratio between the pitches (9, 21; 21, 9) is approximately 1.02 to 1.5.

6. The screw (1) of at least one of claims 1 to 5, **characterised in that** the first thread (5) has a first core diameter (8) and the second thread (13) has a second core diameter (20), the first core diameter (8) being greater than the second core diameter (20).

7. The screw (1) of at least one of claims 1 to 6, **characterised in that** the first thread (5) has a first pitch diameter (7) being approximately as great as the second outer diameter (18) of the second thread (13).

8. The screw (1) of at least one of claims 1 to 7, **characterised in that** the thread tip (15) of the second thread (13) is designed to be rounded.

9. The screw (1) of at least one of claims 1 to 7, **characterised in that** the thread tip (15) of the second thread (13) is designed to be flattened.

10. The screw (1) of at least one of claims 1 to 9, **characterised in that** the second thread (13) includes flanks (17) being designed to be rounded.

11. The screw (1) of at least one of claims 1 to 10, **characterised in that** the screw (1) includes a head (2) and a free end (10) facing away from the head (2), the second threaded portion (12) being arranged to face towards the free end (10) and the first threaded portion (4) being arranged between the second threaded portion (12) and the head (2).

12. A method of producing a screw (1), especially a screw (1) of at least one of claims 1 to 11, **characterised by**
cold deforming a wire to produce a screw blank (31) having a head (2), a first blank shank portion (32) having a first diameter and a second blank shank portion (33) having a second diameter, the first diameter being greater than the second diameter,
rolling a first threaded portion (4) having a first thread (5) having a first outer diameter (6) and a first pitch (9) in the first blank shank portion (32), the first threaded portion (4) serving to realize a screwed connection with a corresponding inner thread (24) of a nut (23) or of a different component (22);
rolling a second threaded portion (12) having a second thread (13) having a second outer diameter (18) and a second pitch (21) in the second blank shank portion (33),
wherein the second threaded portion (12) is designed as a self-centring threaded portion,
wherein the second thread (13) has a broadened thread tip (15),
wherein the second outer diameter (18) of the second thread (13) is smaller than the first outer diameter (6) of the first thread (5), and
wherein the first pitch (9) of the first thread (5) and the second pitch (21) of the second thread (13) are different.

13. The method of claim 12, **characterised in that** rolling the first threaded portion (4) is realised by a first rolling tool and rolling the second threaded portion (12) is realised by a second rolling tool, the rolling tools being designed as separate tools.

## Revendications

1. Vis (1), avec
une première portion filetée (4) avec un premier filetage (5) avec un premier diamètre extérieur (6) et un premier pas (9) pour l'établissement d'une liaison vissée avec un filetage interne correspondant (24) d'un écrou (23) ou d'un autre élément (22);
une deuxième portion filetée (12) avec un deuxième filetage (13) avec un deuxième diamètre extérieur (18) et un deuxième pas (21),
la deuxième portion filetée (12) étant conçue comme une portion filetée à centrage automatique,
le deuxième filetage (13) comprenant une pointe filetée élargie (15),
le deuxième diamètre extérieur (18) du deuxième filetage (13) étant inférieur au premier diamètre extérieur (6) du premier filetage (5), **caractérisée en ce que** le premier pas (9) du premier filetage (5) et le deuxième pas (21) du deuxième filetage (13) sont différents.

2. Vis (1) selon la revendication 1, **caractérisée en ce que** la première et la deuxième portion filetée (4, 12) sont distantes axialement l'une de l'autre.

3. Vis (1) selon la revendication 2, **caractérisée en ce que** la distance axiale entre la première et la deuxième portion filetée (4, 12) correspond au moins à la moitié du pas (9) de la première portion filetée (4).

4. Vis (1) selon l'une des revendications 1 à 3, **caractérisée en ce que** la deuxième portion filetée (12) présente un pas supérieur à celui de la première portion filetée (4).

5. Vis (1) selon l'une des revendications 1 à 4, **caractérisée en ce que** le rapport entre les pas (9, 21 ; 21, 9) est d'environ 1,02 à 1,5.

6. Vis (1) selon l'une des revendications 1 à 5, **caractérisée en ce que** le premier filetage (5) présente un premier diamètre à fond de filet (8) et le deuxième filetage (13) présente un deuxième diamètre à fond de filet (20), le premier diamètre à fond de filet (8) étant supérieur au deuxième diamètre à fond de filet (20).

7. Vis (1) selon l'une des revendications 1 à 6, **caractérisée en ce que** le premier filetage (5) présente un premier diamètre sur flancs (7) qui est approximativement égal au deuxième diamètre extérieur (18) du deuxième filetage (13).

8. Vis (1) selon l'une des revendications 1 à 7, **caractérisée en ce que** la pointe filetée (15) du deuxième filetage (13) est arrondie.

9. Vis (1) selon l'une des revendications 1 à 7, **caractérisée en ce que** la pointe filetée (15) du deuxième filetage (13) est aplatie.

10. Vis (1) selon l'une des revendications 1 à 9, **caractérisée en ce que** le deuxième filetage (13) présente des flancs (17) qui sont arrondis.

11. Vis (1) selon au moins l'une des revendications 1 à 10, **caractérisée en ce que** la vis (1) comprend une tête (2) et une extrémité libre (10) opposée à la tête (2), la deuxième portion filetée (12) étant du côté de l'extrémité libre (10) et la première portion filetée (4) se trouvant entre la deuxième portion filetée (12) et la tête (2).

12. Procédé de réalisation d'une vis (1), plus particulièrement d'une vis (1) selon au moins l'une des revendications 1 à 11, **caractérisé par**
le façonnage à froid d'un fil pour la réalisation d'une ébauche de vis (31) avec une tête (2), une première portion de tige (32) avec un premier diamètre et une deuxième portion de tige (33) avec un deuxième diamètre, le premier diamètre étant supérieur au deuxième diamètre,
le roulage d'une première portion filetée (4) avec un premier filetage (5) avec un premier diamètre extérieur (6) et un premier pas (9) dans la première portion de tige (32), la première portion filetée (4) servant à réaliser une liaison vissée avec un filetage interne (24) correspondant d'un écrou (23) ou d'un autre élément (22);
le roulage d'une deuxième portion filetée (12) avec un deuxième filetage (13) avec un deuxième diamètre extérieur (18) et un deuxième pas (21) dans la deuxième portion de tige (33),
la deuxième portion filetée (12) étant conçue comme une portion filetée à centrage automatique,
le deuxième filetage (13) comprenant une pointe filetée élargie (15),
le deuxième diamètre extérieur (18) du deuxième filetage (13) étant inférieur au premier diamètre extérieur (6) du premier filetage (5), et
le premier pas (9) du premier filetage (5) et le deuxième pas (21) du deuxième filetage (13) sont différents.

13. Procédé selon la revendication 12, **caractérisé en ce que** le roulage de la première portion filetée (4) est effectué avec un premier outil de roulage et le roulage de la deuxième portion filetée (12) est effectué avec un deuxième outil de roulage, les outils de roulage étant conçus comme des outils séparés.
